# EUROPÄISCHE PATENTSCHRIFT

(11) **EP 0 672 524 B1**
(45) Veröffentlichungstag und Bekanntmachung des Hinweises auf die Patenterteilung: **19.05.1999**
(21) Anmeldenummer: 95103364.6
(22) Anmeldetag: 09.03.1995
(51) Int. Cl.: B32B 31/00, B32B 27/42, B29C 65/48, C08J 5/12, C09J 161/06

(54) **Verfahren zur Herstellung von dimensionsstabilen Akustik-Bauteilen**
Method of making dimensionally stable sound dampening building elements
Procédé pour fabriquer des éléments de construction pour l'atténuation de son à dimensions stables

(30) Priorität: 15.03.1994 DE 4408687
(43) Veröffentlichungstag der Anmeldung: 20.09.1995
(73) Patentinhaber: BASF AKTIENGESELLSCHAFT, 67056 Ludwigshafen (DE)
(72) Erfinder: Krückau, Fritz Ernst, D-67271 Battenberg (DE); Stöhr, Dieter, D-67269 Grünstadt (DE)

(56) Entgegenhaltungen:
- EP-A- 0 490 389
- DE-A- 2 030 955
- DE-A- 3 401 839
- DE-A- 4 138 877
- GB-A- 2 277 710
- US-A- 4 540 717
- DATABASE WPI Week 9039 Derwent Publications Ltd., London, GB; AN 90294841 & JP-A-02 208 040 (TOYO RUBBER CHEM IND KK) , 17.August 1990
- PATENT ABSTRACTS OF JAPAN vol. 18 no. 94 (M-1561) ,16.Februar 1994 & JP-A-05 301291 (BRIDGESTONE CORP) 16.November 1993,
- PATENT ABSTRACTS OF JAPAN vol. 13 no. 257 (M-837) ,14.Juni 1989 & JP-A-01 060451 (TOOKEN JUSHI KAGAKU KK) 7.März 1989,
- KUNSTSTOFFE, Bd. 75, Nr. 11, 1985 MUNCHEN DE, Seiten 843-848, DR. H. WEBER AND DIPL.-ING. F. KRÜCKAU 'Neuer elastischer Schaumstoff auf Basis Melaminharz'
- DATABASE WPI Week 8001 Derwent Publications Ltd., London, GB; AN 80-00972c & JP-A-54 148 823 (MITSUI PETROCHEM IND KK) , 21.November 1979
- DATABASE WPI Week 7720 Derwent Publications Ltd., London, GB; AN 77-34569y & CA-A-1 009 780 (SUMITOMO DUREZ CO) , 3.Mai 1977

## Beschreibung

Die Erfindung betrifft ein Verfahren zur Herstellung von dimensionsstabilen Akustikbauteilen, bei dem man Platten aus einem offenzelligen Duromer-Schaumstoff beidseitig mit dünnen, reißfesten Deckschichten kaschiert.

Es ist bekannt, daß offenzellige Schaumstoffe, z.B. solche auf Basis von Melaminharzen, hervorragende schallabsorbierende Eigenschaften haben (siehe z.B. Kunststoffe 75, Heft 11 (1985), Seiten 843 bis 848). Aus entsprechenden Schaumstoffplatten kann man durch Kaschieren mit festen Deckschichten dimensionsstabile Akustik-Bauteile herstellen.

Solche Bauteile wurden bisher in einem aufwendigen Verfahren dadurch hergestellt, daß man die offenzellige Schaumstoffplatte voll mit einem in Wasser dispergierten Leimharz tränkte, einen Teil des Harzes mechanisch abquetschte und anschließend bei Temperaturen von etwa 150°C bis auf eine geringe Restfeuchte trocknete.

Die so behandelte Platte wurde beidseitig mit Deckschichten versehen und in einer beheizten Pressform zu einem dimensionsstabilen Formteil verpreßt.

Der Erfindung lag nun die Aufgabe zugrunde, dieses langwierige und energieaufwendige Verfahren zu vereinfachen.

Es wurde nun gefunden, daß man dimensionsstabile Akustik-Bauteile auch ohne Tränken der Schaumstoffplatten mit Leim dann erhält, wenn man beidseitig auf die Oberfläche von offenzelligen Duromer-Schaumstoffplatten eine Bindemittelsuspension aufbringt, darauf beidseitig dünne, hochfeste Deckschichten auflegt und den Verbund bei Temperaturen von 50 bis 250°C und Drücken von 2 bis 200 bar verpreßt.

Als Ausgangsmaterialien für die Schaumstoffplatten geeignet sind die Kondensationsharze auf Basis von Melamin und Formaldehyd. Besonders bevorzugt sind elastische Schaumstoffe auf Basis von Melaminharzen, der in US-A-4,540,717 beschriebenen Art. Die Schaumstoffplatten haben im allgemeinen ein spezifisches Gewicht von 5 bis 100 g/l, insbesondere von 8 bis 20 g/l und eine Dicke von 5 bis 100 mm, vorzugsweise von 10 bis 50 mm.

Als Deckschichten geeignet sind Metall- oder Kunststoff-Folien, z.B. aus Aluminium oder TEFLON, mit einer Dicke von 0,05 bis 1 mm, ferner Faservliese auf Basis von Mineral-, Kunststoff-, Zellstoff- oder Baumwoll-Fasern, mit einer Schichtdicke von 0,1 bis 3 mm, die zweckmäßigerweise einseitig mit einem üblichen Kleber, z.B. aus duroplastischen oder thermoplastischen Harzen beschichtet sind. Faservliese und dünne Folien bis ca. 0,5 mm Dicke haben den Vorteil, daß sie schalltransparent sind.

Als Bindemittel kommen härtbare Melamin-, Harnstoff- und Phenolharze in Frage, die als etwa 50 %ige wässrige Lösungen eingesetzt werden. Als Härter werden Verbindungen eingesetzt, die Protonen abspalten. In Frage kommen organische und anorganische Säuren, wie z.B. Ameisensäure, Sulfonsäuren, Phosphorsäure und Hydrogenphosphate, sowie Paraformaldehyd. Weitere geeignete Bindemittel sind z.B. Epoxid-, Polyester- und Acrylharze.

Bei dem erfindungsgemäßen Verfahren wird zunächst eine Bindemittelsuspension auf die Oberfläche der Schaumstoffplatten aufgebracht, vorzugsweise in Mengen von 10 bis 1000 g·m⁻². Dies kann durch Gießen, Spritzen oder Streichen geschehen. Dann werden beidseitig die Deckschichten aufgelegt und der Verbund wird bei Temperaturen von 50 bis 250°C, vorzugsweise von 80 bis 180°C und Drücken von 2 bis 200 bar, vorzugsweise von 10 bis 50 bar verpreßt. Die Preßzeit beträgt im allgemeinen 0,1 bis 10 min. Je nach Form der Pressen können ebene oder auch sphärische, z.B. gebogene Bauteile hergestellt werden.

Beim Verpressen wird das Bindemittel gehärtet und das Bauteil geformt.

Die erfindungsgemäß hergestellten Bauteile weisen eine hohe Schallabsorption, eine gute Dimensionsstabilität und Temperaturbeständigkeit auf. Sie können als Akustik-Bauteile im Kraftfahrzeugbau, z.B. für Stirnwandverkleidungen, Motorraum-Isolierungen oder Getriebetunnelverkleidungen verwendet werden, ebenso für die Schalldämmung stationärer Maschinen sowie die Schalldämmung und -dämpfung in Gebäuden.

### Beispiele

Auf eine Melaminharz-Schaumstoffplatte (BASOTECT der BASF) mit den Abmessungen 200 x 200 x 30 mm wird beidseitig eine Bindemittelsuspension aus 700 g Wasser, 300 g Phenolharz (KAURESIN-Leim 260) und 90 g Paraformaldehyd-Härter (KAURESIN-Härter 444) aufgesprüht. Der Bindemittelauftrag beträgt auf der Unter- und Oberseite jeweils 200 g/m². Mit Hilfe eines Foulard-Apparates wird die Bindemittelsuspension in die äußeren Schichten des Schaumstoffs eingepreßt. Als Deckschicht werden in Beispiel 1 eine 0,1 mm dicke Aluminiumfolie und in Beispiel 2 ein 0,4 mm dickes Schmelzvlies G 2010/60R (Fa. Hof Textil) beidseitig aufgelegt. In Beispiel 3 wird an die Unterseite eine Aluminiumfolie und auf die Oberseite ein Faservlies aufgelegt. Die Verbunde werden 2 min lang bei 160°C und 25 bar und bei einer Schließgeschwindigkeit von 215 mm/min und einem Hub von 50 mm verpreßt. Es werden dimensionsstabile Bauteile erhalten.

## Patentansprüche

1. Verfahren zur Herstellung von dimensionsstabilen Akustik-Bauteilen, bei dem Platten aus einem offenzelligen Duromer-Schaumstoff aus Melamin/Formaldehyd-Harz beidseitig mit dünnen, reißfesten Deckschichten kaschiert werden, dadurch gekennzeichnet, daß man auf die Oberfläche der Schaumstoffplatten eine wäßrige Bindemittelsuspension auf Basis von härtbaren Melamin-, Harnstoff- oder Phenolharzen aufbringt, darauf Deckschichten aus 0,05 bis 1 mm dicken Metall- oder Kunststoff-Folien oder 0,1 bis 3 mm dikken Faservliesen auflegt und den Verbund bei Temperaturen zwischen 50 und 250°C und Drücken von 2 bis 200 bar verpreßt.

## Claims

1. A process for the production of dimensionally stable acoustic components, in which boards of an open-cell thermoset foam made from melamine-formaldehyde resin are laminated on both sides with thin, tear-resistant outer layers, which comprises applying an aqueous binder suspension based on curable melamine, urea or phenolic resins to the surface of the foam boards, laying outer layers of from 0.05 to 1 mm metal foils or plastic films or from 0.1 to 3 mm fiber webs thereon, and pressing the composite at from 50 to 250°C and at from 2 to 200 bar.

## Revendications

1. Procédé pour la fabrication d'éléments de construction acoustiques manifestant une stabilité dimensionnelle, dans lequel on contrecolle sur les deux faces de panneaux en mousse duromère à alvéoles ouverts constituée d'une résine de mélamine/formaldéhyde, de minces couches de recouvrement résistant à la déchirure par traction, caractérisé en ce qu'on applique sur la surface des panneaux en mousse, une suspension aqueuse de liant à base de résines durcissables de mélamine, d'urée ou phénolique, on dépose sur cette dernière des couches de recouvrement constituées par des feuilles métalliques ou en matières synthétiques possédant une épaisseur de 0,05 à 1 mm ou encore des non-tissés possédant une épaisseur de 0,1 à 3 mm, et on comprime le composite à des températures entre 50 et 250°C et sous des pressions de 2 à 200 bar.
